# Europäisches Patentamt

## European Patent Office

## Office européen des brevets

(19)

(11) Veröffentlichungsnummer: **0 114 921**
**B1**

(12) # EUROPÄISCHE PATENTSCHRIFT

(45) Veröffentlichungstag der Patentschrift:
**04.10.89**

(21) Anmeldenummer: **83107015.6**

(22) Anmeldetag: **18.07.83**

(51) Int. Cl.⁴: **F 16 J 15/06,** F 01 N 7/00,
F 16 J 15/20, F 01 N 7/18,
F 16 L 27/10, F 16 L 27/06

(54) Dichtungsring.

(30) Priorität: **02.12.82 DE 3244505**

(43) Veröffentlichungstag der Anmeldung:
**06.08.84 Patentblatt 84/32**

(45) Bekanntmachung des Hinweises auf die Patenterteilung:
**04.10.89 Patentblatt 89/40**

(84) Benannte Vertragsstaaten:
**FR GB IT SE**

(56) Entgegenhaltungen:
**EP-A-0 103 676**
**DE-A-2 833 649**
**DE-B-1 128 646**
**US-A-4 042 747**
**US-A-4 209 177**

(73) Patentinhaber: **GOETZE AG, Bürgermeister-
Schmidt- Strasse 17, D-5093 Burscheid 1 (DE)**

(72) Erfinder: **Lönne, Klaus, Dipl.- Ing., Bürgermeister-
Schmidt- Strasse 50, D-5093 Burscheid (DE)**
Erfinder: **Majewski, Klaus- Peter, Dipl.- Ing., Am
Sportfeld 26, D-5093 Burscheid (DE)**

**Beschreibung**

Die Erfindung betrifft einen Dichtungsring mit mindestens einer als Gleitfläche dienenden Mantelfläche, wie insbesondere einen Dichtungsring zur Abdichtung gelenkig verbundener Rohrverbindungen in vorzugsweise Auspuffsystemen von Verbrennungskraftmaschinen, bestehend aus Fasergeweben, Fasergewirken, Fasergestricken oder langsträhnigen Fasern auf der Basis von bevorzugt Metallfasern, die zusammen mit eingelagerten Gleitmaterial verpreßt sind.

In beispielsweise Auspuffsystemen von Verbrennungskraftmaschinen ist es bekannt, die Rohrenden von Abgassammelrohr und Abgasauslaßrohr durch ein Rohrkupplungssystem nach dem Kugelpfannenprinzip zur Vermeidung der Übertragung der vom Motor ausgehenden Schwingungen zu verbinden. Der dazwischen geschaltete Dichtring ist der Kontur der Kugel beziehungsweise der Kugelschalensegmente angepaßt und ist entsprechend im motorischen Betrieb an mindestens einer seiner Mantelflächen gleitender und reibender Belastung ausgesetzt.

Entsprechend dieser Funktion als Gleitlager bestehen nach der US-A-3 276 795 und der GB-A-1 003 540 derartige Dichtungsringe für Rohrleitungen aus dem Gleitmaterial Polytetrafluorethylen oder gegebenenfalls einer mit Graphit imprägnierten Bronze, und nach der DE-A-1 526 557 werden bei derartigen Auspuffrohrverbindungen Dichtungsringe aus Graphit oder auch aus hochkohlenstoffhaltigem federnden Gußeisen eingesetzt.

Derartige Dichtringe in moderner Bauart bestehen heute aus miteinander verpreßten Metallfasermaterialien auf der Basis von meistens Stahlfasern und festen Gleitwerkstoffen aus meistens Graphit. Der eingelagerte Metallfaserkörper bildet dann das Skelett des Dichtringes, das dann mit dem Gleitmaterial durchsetzt und beschichtet ist.

So besteht nach der DE-A-2 829 333, der DE-A-2 935 414 oder der US-A-4 209 177 der verstärkende Faserkern aus einem entsprechend gefalteten und in Umfangsrichtung gewickelten Stahldrahtgewebe oder Stahlfasergestricken. In diesem Fall besteht aber die Gefahr, daß insbesondere an den Faltstellen des Drahtgewebes die Stahldrähte brechen und danach die bedeckenden Gleitbeschichtungen mit ihren Spitzen durchstoßen, so daß es zum Kontakt mit den Gleitflächen der Rohre kommt. Bei Belastungen im motorischen Betrieb kommt es dann an diesen Stellen unter Quietschgeräuschen zu Freßerscheinungen mit sich verstärkenden zerstörenden Verschleißerscheinungen und schließlich zum Undichtwerden der Verbaindungsstelle. Zur Abhilfe verwendet man daher nach der DE-C-2 845 949 einzelne, relativ lange, bevorzugt in Umfangsrichtung gewickelte Stahlfasern, oder nach der DE-A-3 107 920 wird das verstärkende Metallfaserskelett aus Stahlwolle mit unregelmäßiger Ausrichtung der Stahlfasern verwendet.

Nach der EP-A-103 676 werden aus Stahlfasern relativ kurzer Länge und Graphitpulvern zunächst möglichst homogene Mischungen gebildet, so daß beim Verpressen ein Dichtring aus einem festen Metallfaserfilz mit ein- und aufgelagerten Festschmierstoffen gebildet wird. Durch derartige Maßnahmen wurden zwar die Dichtringe in Bezug auf ihre Verschleißanfälligkeit wesentlich verbessert, eine optimale Lösung des geschilderten Problemes wurde jedoch auf diese Weise noch nicht erreicht, und im motorischen Betrieb wurden immer wieder Schäden durch Freßerscheinungen am Metall zu Metallkontaktstellen beobachtet.

Deshalb hat man nach der EP-A-103 676 den Gemischen von kurzen Metallfasern und Gleitmitteln schon bis zu 10 Gewichtsprozent solcher Stoffe zugegeben, die in der Betriebshitze unter Bildung solcher Zersetzungsprodukte zerfallen, die mit den Metallfasern unter Bildung von Oberflächenschutz- oder Gleitschichten chemisch reagieren. Solche Stoffe sind bevorzugt Natriumthiosulfat, Borkarbid ($B_4C$) und/oder Calciumfluorid.

Der vorliegenden Erfindung liegt daher die Aufgabe zugrunde, Dichtungsringe mit den Faserwerkstoffen gemäß Oberbegriff des Hauptpatentanspruches zu schaffen, welche gute Gleiteigenschaften ohne die beschriebenen Verschleißerscheinungen besitzen. Der Ring soll zugleich einfach und wirtschaftlich herstellbar sein.

Erfindungsgemäß wird die Aufgabe durch einen Dichtungsring nach dem Oberbegriff des Hauptpatentanspruches gelöst, welcher Zusatzstoffe enthält, die zusammen mit dem Gleitmaterial und den Fasern verpresst sind, und die im Dichtungsring homogen und fein verteilt im Gleitmaterial vorliegen, wobei die Zusatzstoffe unter dem Druck und/oder der Wärmeentwicklung bei Reibbelastung zusammen mit den Fasern chemisch reagieren. Bevorzugt enthält der Dichtungsring bis zu 10 Gewichtsteile derartiger Zusatzstoffe, die bei der Herstellung des Dichtungsringes bevorzugt zunächst mit dem Gleitmaterial vermischt und anschließend zusammen mit den Metallfasern verpreßt sind.

Derartige Zusatzstoffe sind an und für sich aus der DE-OS-2 458 803 als Zusatz zu Schmierstoffen bekannt, und es handelt sich bevorzugt um Chloride, Sulfate, Carbonate, Borate oder Phosphate der Alkalimetalle, Silikat- oder Phosphatgläser, Thioverbindungen, vorzugsweise in der Form von Thiosulfaten oder Dithiophosphaten, sowie organische Chlor-, Schwefel-, Phosphor- und Arsenkomplexe. Ebenso können auch bevorzugt Borkarbide ($B_4C$) und Kaliumborfluorid sowie borhaltige Substanzen als Zusatzstoffe eingesetzt werden.

Nach der DE-OS-2 458 803 werden diese Stoffe aber in der Form von Lösungen, Emulsionen, Suspensionen oder Mischungen zu Schmierstoffen in der Form von Flüssigkeiten, Fetten oder auch Festschmierstoffen zugegeben, damit diese im Betrieb zwischen den Gleitflächen der Reibpartner wirksam werden und einen entsprechenden Einfluß auf die Gleitflächen bewirken.

Gemäß unserer erfinderischen Idee sind die Zusatzstoffe zusammen mit den Gleitmaterialien und den Metallfasermaterialien verpreßt und liegen im Dichtring homogen verteilt im Gleitmaterial vor. Es wurde gefunden, daß Dichtungsringe aus miteinander verpreßten festen Gleitmaterialien und Metallfasern unabhängig davon, welche Gleitmaterialien eingesetzt werden, und ob die Metallfasern in der Form eines gefalteten und gewickelten einliegenden Metalldrahtgewebes oder -gestrickes, in der Form von in Umfangsrichtung angeordneten Metallfasern oder in der Form von Metallfaserwolle vorliegen, in Motortestläufen keinerlei Freßerscheinungen und damit verbundenen Quietschgeräuschen und Undichtwerden mehr aufweisen. Dabei scheinen offensichtlich die Zusatzstoffe nur an den Stellen mit den Metallfasern unter Bildung von Oberflächenschichten oder einem chemischen Polieren der Metallfasern chemisch zu reagieren, wo diese mit der Gleitgegenfläche unter starker Wärmeentwicklung und/unter Druckeinwirkung in Berührung kommen. Im Innern des Dichtungsringes dagegen bleiben die Zusatzstoffe unverändert und bilden einen Vorrat bei weiterem Abrieb des Dichtungsringes.

Durch den erfindungsgemäßen Einsatz der im Dichtring zwischen den Gleitmaterialien und den Metallfasern fein verteilt vorliegenden Zusatzstoffe ist somit ein einfach und wirtschaftlich herzustellender Dichtungsring geschaffen, bei dem die beschriebenen Nachteile mit Freßerscheinungen unter Quietschgeräuschen mit Verschleiß und Undichtwerden vermieden sind. Während die Erfindung bevorzugt für Dichtungsringe mit einliegenden Metallfasern eingesetzt werden soll, ist es im Sinne der Erfindung auch möglich, anstelle von Metallfasern diese auch im Gemisch zusammen mit anderen Fasern organischen oder anorganischen Ursprunges zu verwenden. Im Sinne der Erfindung können anstelle von Metallfasern auch organische oder anorganische Fasern alleine oder im Gemisch verwendet werden, allerdings müssen dann die Zusatzstoffe entsprechend den eingesetzten Faserarten abgestimmt sein.

## Patentansprüche

1. Dichtungsring mit mindestens einer als Gleitfläche dienenden Mantelfläche, wie insbesondere ein Dichtungsring zur Abdichtung gelenkig verbundener Rohrverbindungen in vorzugsweise Auspuffsystemen von Verbrennungskraftmaschinen, bestehend aus Fasergewirken, Fasergeweben, Fasergestricken oder langsträhnigen Fasern auf der Basis von bevorzugt Metallfasern, die zusammen mit eingelagertem Gleitmaterial verpreßt sind, dadurch gekennzeichnet, daß der Dichtungsring Zusatzstoffe enthält, die zusammen mit dem Gleitmaterial und den Fasern verpreßt sind, und die im Dichtungsring homogen und fein verteilt im Gleitmaterial vorliegen, wobei die Zusatzstoffe unter dem Druck und/oder der Wärmeentwicklung bei Reibbelastung zusammen mit den Fasern chemisch reagieren.

2. Dichtungsring nach Anspruch 1, dadurch gekennzeichnet, daß der Dichtungsring bis zu 10 Gewichtsteile des Zusatzstoffes enthält.

3. Dichtungsring nach mindestens einem der Ansprüche 1 bis 2, dadurch gekennzeichnet, daß die Zusatzstoffe aus Chloriden, Sulfiden, Carbonaten, Boraten und/oder Phosphaten der Alkalimetalle bestehen.

4. Dichtungsring nach mindestens einem der Ansprüche 1 bis 3, dadurch gekennzeichnet, daß die Zusatzstoffe aus Silikat- und/oder Phosphatglaspulvern bestehen.

5. Dichtungsring nach mindestens einem der Ansprüche 1 bis 4, dadurch gekennzeichnet, daß die Zusatzstoffe aus Thioverbindungen auf der Basis von Thiosulfaten und/oder Dithiophosphaten bestehen.

6. Dichtungsring nach mindestens einem der Ansprüche 1 bis 5, dadurch gekennzeichnet, daß die Zusatzstoffe aus organischen Chlor-, Schwefel-, Phosphor- und/oder Arsenkomplexen bestehen.

7. Dichtungsring nach mindestens einem der Ansprüche 1 bis 6, dadurch gekennzeichnet, daß die Zusatzstoffe aus Borkarbiden ($B_4C$) und/oder Kaliumborfluorid ($KBF_4$) bestehen.

## Claims

1. Sealing ring with a least one peripheral surface serving as a sliding surface, such as especially a sealing ring for sealing pipe connections connected in articulated manner, preferably in exhaust systems of internal combustion engines, consisting of meshed fibres, woven fibres, knitted fibres or longstranded fibres on the basis of preferably metal fibres, which are pressed together with embedded sliding material, characterized in that the sealing ring contains additives which are pressed together with the embedded sliding material and the fibres, and which are present in the sealing ring homogenously and finely distributed in the sliding material, wherein the additives react chemically with the fibres under the pressure and/or the development of heat when frictionally loaded.

2. Sealing ring according to claim 1, characterized in that the sealing ring contains up to 10 parts by weight of the additive.

3. Sealing ring according to at least one of claims 1 to 2, characterized in that the additives consist of chlorides, sulphides, carbonates, borates and/or phosphates of the alkali metals.

4. Sealing ring according to at least one of claims 1 to 3, characterized in that the additives consist of silicate and/or phosphate glass powders.

5. Sealing ring according to at least one of claims 1 to 4, characterized in that the additives consist of thio compounds based on thiosulphates and/or dithiophosphates.

6. Sealing ring according to at least one of claims 1 to 5, characterized in that the additives consist of organic chlorine, sulphur, phosphorus and/or arsenic complexes.

7. Sealing ring according to at least one of claims 1 to 6, characterized in that the additives consist of boron carbides ($B_4C$) and/or potassium boron fluoride ($KBF_4$).

**Revendications**

1. Anneau d'étanchéité avec au moins un revêtement servant de surface de glissement, tel qu'en particulier un anneau d'étanchéité permettant de rendre étanche des liaisons de tuyaux articulés avantageusement dans des systèmes d'échappement de machines à combustion interne, ledit anneau étant constitué de fibres maillées, tissées, tricotées ou en longs écheveaux sur la base de préférence de fibres métalliques, lesdites fibres étant pressées ensemble avec un matériau antigrippant intercalé entre elles, caractérisé en ce que ledit anneau d'étanchéité contient des adjuvants qui sont pressés ensemble avec le matériau antigrippant et les fibres et qui sont présents dans l'anneau d'étanchéité répartis finement et de façon homogène, lesdits adjuvants réagissant chimiquement avec lesdites fibres sous l'effet de la pression et/ou du dégagement de chaleur dus aux frottements.

2. Anneau d'étanchéité selon la revendication 1, caractérisé en ce que ledit anneau d'étanchéité contient jusqu'à 10 % en poids d'adjuvants.

3. Anneau d'étanchéité selon au moins l'une des revendications 1 à 2, caractérisé en ce que les adjuvants sont constitués de chlorures, sulfures, carbonates, borates et/ou phosphates de métaux alcalins.

4. Anneau d'étanchéité selon au moins l'une des revendications 1 à 3, caractérisé en ce que les adjuvants sont constitués de poudres de silicate et/ou de phosphate.

5. Anneau d'étanchéité selon au moins l'une des revendications 1 à 4, caractérisé en ce que les adjuvants sont constitués de liaisons thio sur la base de thiosulfates et/ou de dithiophosphates.

6. Anneau d'étanchéité selon au moins l'une des revendications 1 à 5, caractérisé en ce que les adjuvants sont constitués de complexes organiques de chlore, soufre, phosphore et/ou arsenic.

7. Anneau d'étanchéité selon au moins l'une des revendications 1 à 6, caractérisé en ce que les adjuvants sont constitués de carbures de bore ($B_4C$) et/ou de florure de bore-potassium ($KBF_4$).